# EUROPÄISCHE PATENTANMELDUNG

(11) **EP 2 487 381 A1**
(43) Veröffentlichungstag der Anmeldung: **15.08.2012**
(21) Anmeldenummer: 11154408.6
(22) Anmeldetag: 14.02.2011
(51) Int. Cl.: F16F 9/05

(54) **Luftfeder mit beweglichen Kolbensegmenten und Rollbalg**

(71) Anmelder: Technische Universität Darmstadt, 64283 Darmstadt (DE)
(72) Erfinder: Bedarff, Thomas, 64287, Darmstadt (DE); Pelz, Peter, 64285, Darmstadt (DE); Thurner, Joachim, 64297, Darmstadt (DE)
(74) Vertreter: Stumpf, Peter

(57) **Zusammenfassung**

Die Entwicklung beschreibt eine Luftfeder, mit beweglichen Kolbensegmenten, die eine verbesserte Dämpfung mittels Kopplung zweier Kolbensegmentringen ermöglicht. Weiterhin wird ein Verschleiß des Rollbalges durch eine optimierte Kolbensegmentform verringert.

## Beschreibung

Die vorliegende Erfindung betrifft eine Luftfeder mit Dämpfungseigenschaften. Der Kolben enthält mehrere bewegliche Segmente, die verschiebbar sind und auf einen Rollbalg wirken.

### [Stand der Technik]

In der EP2247457 wurden bewegliche Lamellen zur Einwirkung auf den Rollbalg beschrieben, die mit Piezoelementen und Kunststoffverformungskörper verstellt wurden.

In der DE4135900 wurden ebenfalls bewegliche Lamellen zur Einwirkung auf den Rollbalg beschrieben, die mittels Pneumatik verstellt wurden.

In beiden Schriften sind die zur Verstellung notwendigen, auftretenden Kräfte sehr groß so, dass ein Einsatz mit Piezoelementen nicht die lange Haltbarkeit zeigt. Weiterhin bewirkt die Verstellung der Lamellen eine lokale Überdehnung des Rollbalgs und damit eine schnellere Abnutzung weiterhin kann es zu Verklemmungen kommen.

In der EP2230109 wird ebenfalls eine Einwirkung auf den Rollbalg beschrieben, wobei hier aber die Einwirkung durch einen zweiten Rollbalg erfolgt. Da beide aus Gummi sind hat da eine erhöhte Reibung zur folge, so dass auch hier eine schnellere Abnutzung entsteht.

### [Aufgabe]

Aufgabe der vorliegenden Erfindung ist es, die Nachteile des Standes der Technik zu beseitigen bzw. zu umgehen.

### [Lösung der Aufgabe]

Diese Aufgabe wird erfindungsgemäß gelöst indem man den Kolben in Segmente aufteilt, ringförmig anordnet (Kolbensegmentring) und die einzelnen Kolbensegmente verschiebbar macht. Es ist dadurch möglich mit einem mechanischen, elektrischen, elektromechanischen oder hydraulischen Stellantrieb die einzelnen Kolbensegmente zu verschieben.

Um eine Verklemmung des Rollbalgs zu verhindern, werden die Kolbensegmente so angeordnet, das auch in eingefahrener Stellung immer ein Spalt zwischen diesen bleibt.

Alternativ dazu werden die Kanten der Kolbensegmente mit einer Ausnehmung zwischen den Kolbensegmenten eingebracht. Die Ausnehmung wird so eingebracht, dass der Umfang der eingefahrenen Segmente mit Ausnehmung gleich dem Umfang der ausgefahrenen Segmente ohne Ausnehmung ist. Dadurch wird ein Materialvorhalt oder Materialreservoir gebildet, so dass eine Umfangsveränderung ohne Dehnung des Rollbalges möglich ist.

Die Ausnehmung ist als Fase an den Segmenten ausgebildet.

Die Ausnehmung ist bevorzugt als radialer Hinterschnitt der Segmente ausgebildet. Es sind mehrere Ausnehmungen in einem Kolbensegment vorhanden. So sind Ausnehmungen an den Rändern, aber auch in der Mitte des Kolbensegmentes angeordnet.

Bevorzugt wird ein Rollbalg mit mindestens einer Längsfalte (stehende oder vertikale Falte) verwendet, wobei die Längsfalte genau zwischen den Segmenten angeordnet ist. Der Rollbalg weist die Längsfalte mindestens im Bereich der Segmente auf. Die Längsfalte kann sich über den gesamten Rollbalg erstrecken.

Es ist auch ein Rollbalg ohne Längs- oder Querfalten einsetzbar.

Die Segmente werden mechanisch, elektrisch, elektromechanisch oder hydraulisch verschoben. Die Fluide der Hydraulik sind gasförmig oder flüssig. In der mechanischen Anordnung setzt man bevorzugt Nocken oder eine Nockenscheibe ein. Es ist auch ein Motorenantrieb mittels Zahn- oder Schneckenräder möglich. Bevorzugt wird die Verschiebung der Kolbensegmente mittels Nocken durchgeführt. Es ist eine ausgestellte und eine eingefahrene Position der Kolbensegmente möglich. Die Nocken sind auf einzelnen Wellen oder als Nockenscheibe realisierbar. Die Nockenscheibe kann damit mehrere Kolbensegmente gleichzeitig ansteuern. Weiterhin muss man bei einer Nockenscheibe keine zusätzlichen Wellen und Zahnräder einsetzen.

Die auftretenden Kräfte zur Bewegung der Nocken sind sehr hoch. Sie können 30 kN übertreffen.

Daher werden bei dieser Entwicklung die verschiebbaren Kolbensegmente in Kolbensegmentringe angeordnet werden, wobei mehrere Kolben und damit mehrere Kolbensegmentringe gekoppelt. Die Kopplung erfolgt hydraulisch oder mechanisch.

Der Rollbalg wird zwischen zwei Kolbensegmentringen angeordnet. Die Nocken des ersten Kolbensegmentringes werden zu den Nocken des zweiten Kolbensegmentringes winklig versetzt angeordnet. Durch die Versetzung wird ein Kolbensegment eines Kolbensegmentringes ausgestellt und ein Kolbensegment eines anderen Kolbensegmentringes eingefahren.

Ebenso sind zwei Nockenscheiben auf einer Welle so zu versetzen, dass ein Kolbensegmentring eine ausgestellte und ein anderer Kolbensegmentring eine eingefahrene Position aufweist. Die Positionen müssen nicht die maximal ausgestellten oder eingefahrenen Positionen darstellen. Damit können Torsionen von Wellen ausgeglichen werden. Die Nockenscheiben müssen daher auch nicht die gleiche Form haben. Bedingt durch die Torsion können die Radien der beiden Nockenscheiben unterschiedlich sein. Es wird ein Versetzungswinkel von 5° bis 180°, bevorzugt 10 ° bis 60° besonders bevorzugt 30 bis 45 ° gewählt. Das hat den Vorteil, das sich bei Druckbelastung der Luftfeder die Kolbensegmente sich selbständig bewegen können. Durch die Verschiebung der Kolbensegmente wird ein größerer oder geringerer Wirkungsquerschnitt des Rollbalges eingestellt.

Durch die Kopplung der beiden Kolbensegmentringe führt eine Kompression des einen Kolbensegmentringes zu einer Erweiterung des anderen Kolbensegmentringes und zum Ausgleich der Kräfte. Damit ist eine erheblich verbesserte Dämpfungswirkung möglich.

Weiterhin ist durch den Versetzungswinkel und durch eine äußere Verstellung der Welle mit den Nockenscheiben die Dämpfungskennlinien der Feder einstellbar. Bei Verwendung einer Hydraulik werden ebenfalls die Kolbensegmentringe so gekoppelt, dass die entsprechenden ein Kolbensegmente von zwei unterschiedlichen Kolbensegmentringen miteinander in Verbindung stehen.

Es können mehrere Kolbensegmentringe können auf einem einzigen Kolben angeordnet sein. Der Rollbalg muss zumindest über einen Kolbensegmentring geführt werden. Ein anderer Kolbensegmentring muss eine korrespondierende entgegengesetzt wirkende Kraft erzeugen. Das kann über mindestens einen Rollbalg erfolgen. Es sind auch mehrere Rollbälge einsetzbar, die in den entsprechenden korrespondierenden Kolbensegmenten gegenläufige Verschiebungsbewegungen bewirken.

Die erfindungsgemäße Ausführung ist nachfolgend erläutert, wobei die Erfindung alle nachfolgend aufgeführten bevorzugten Ausführungsformen einzeln und in Kombination umfasst.

### [Ausführungsbeispiele]

Die Luftfeder besteht aus mindestens einem Kolben, mit mehreren verschiebbaren Kolbensegmenten, die ringförmig (Kolbensegementring) angeordnet sind und mindestens einem Rollbalg.

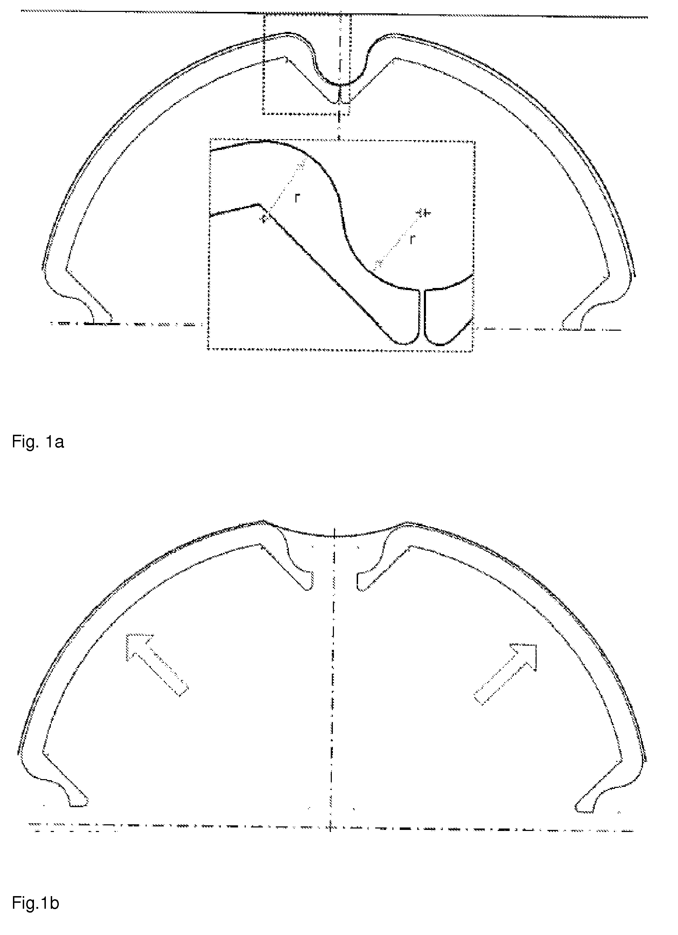

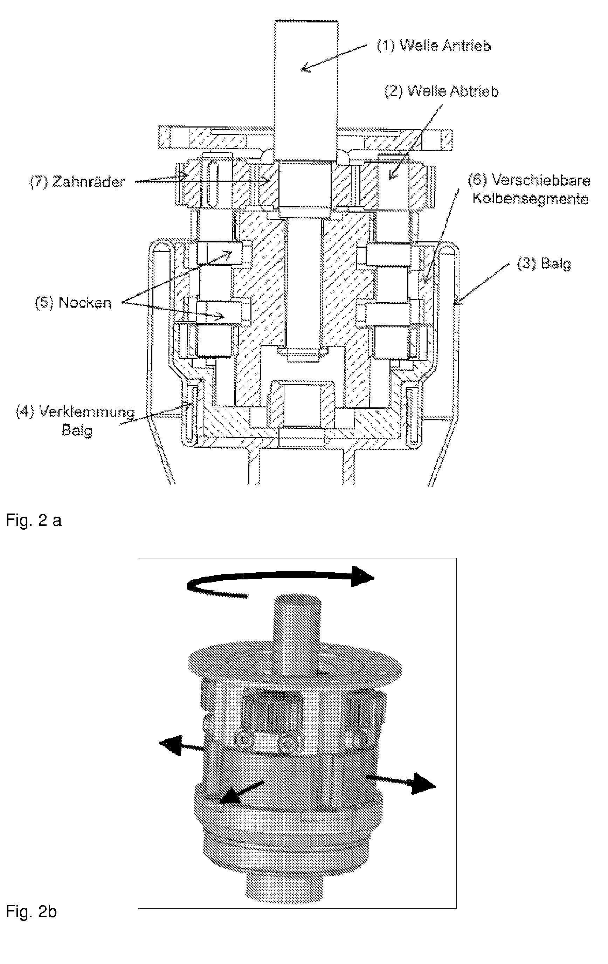

Die Kolbensegmente sind in der Art gestaltet, dass ihre Umfangslänge genau so groß ist, wie der Umfang eines umschließenden Kreises bei radial maximal nach Außen verfahrenen Kolbensegmenten (siehe Fig. 1a und b) .Somit ist es möglich, dass der Balgabschnitt, in die entsprechende Einbuchtung ("Materialvorhalt") der Kontur legt und aus dieser bei einer radialen Verschiebung nach Außen auch wieder herausgezogen wird kann. Es ist damit möglich, die wirksame Fläche zu verändern, ohne den Balg dabei dehnen zu müssen. Der Rollbalg weist bevorzugt eine Falte auf. Der Balg wird bei radial außenstehenden Kolbensegmenten montiert. Die Fig. 2a und 2b zeigt ein ausgeführtes Beispiel mit mehreren Nockenwellen.

Die Veränderung des wirksamen Durchmessers wird mit Hilfe radialverschiebbarer Kolbensegmente eingestellt. Das Drehmoment der Antriebswelle **1** wird über Zahnräder **7** auf die Abtriebswellen **2** übertragen. Die Abtriebswellen **2** sind mit Nocken **5** versehen. Damit wird die Drehbewegung der Abtriebswellen **2** in eine radiale Verschiebungsbewegung der Kolbensegmente **6** umgewandelt. Diese wiederum drücken den am Kolben anliegenden Teil des Balges **3** radial nach außen und vergrößern damit den wirksamen Durchmesser.

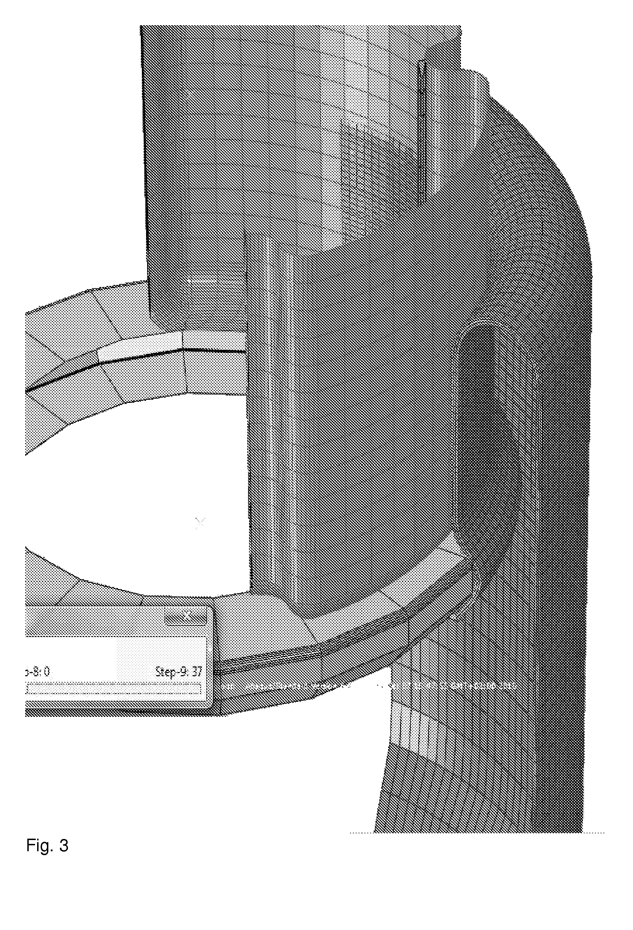

In der Fig. 3 ist ein anliegender Rollbalg mit eingefahrenen Kolbensegmenten sichtbar.

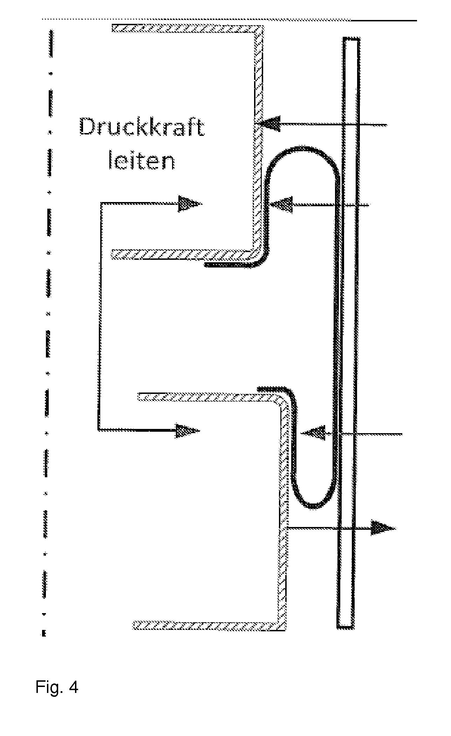

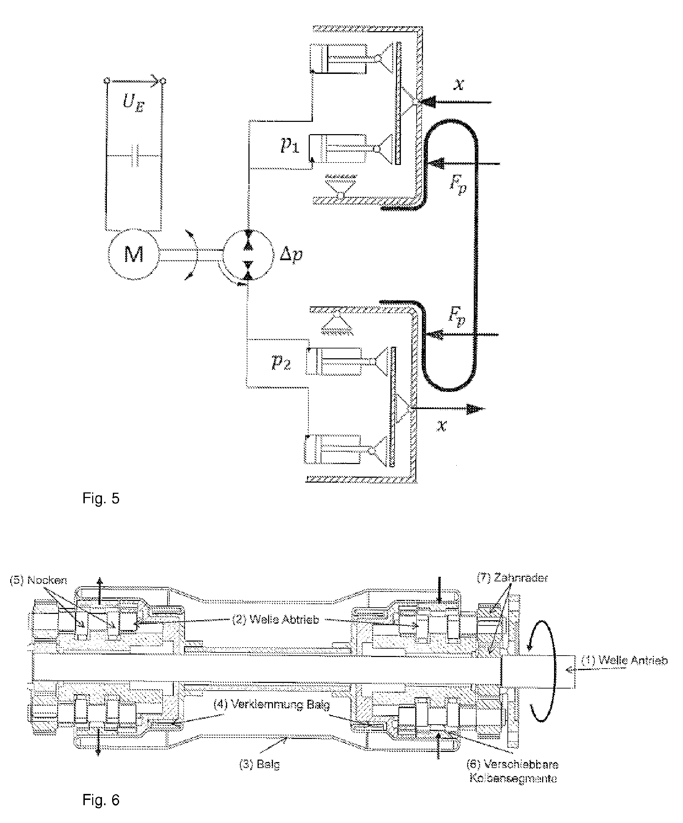

Um die hohen Kräfte beim Ausstellen der Kolbensegmente zu bewirken, werden die Druckkräfte eines Kolbensegmentringes mechanisch an einen zweiten Kolbensegmentring weitergeleitet und umgekehrt, siehe Fig. 4. Um Beispielsweise die Kolbensegmente des oberen Kolbensegmentringes radial nach Außen zu verschieben, kann die ausgeübte Kraft auf die Kolbensegmente des unteren Kolbensegmentringes zum Verschieben des oberen Kolbensegmentringes genutzt werden. Da die Kraft immer der Bewegung von mindestens einem Kolbensegment des oberen bzw. unteren Kolbensegmentringes entgegengerichtet ist, muss für die Veränderung der wirksamen Fläche nur die Differenz der an den Kolben wirkenden Kräfte aufgebracht werden. Liegt der Rollbalg an beiden Kolben mit identischer Länge L an und sind beide Kolbenradien identisch, so herrscht ein Kräftegleichgewicht. Bei einer Veränderung der wirksamen Fläche oder einer Veränderung des Federweges wird dieses Gleichgewicht verlassen und es ist die resultierende Kraft aufzubringen. Die Kopplung selber kann auf unterschiedliche Art und Weise erfolgen, z.B. über mindestens eine Welle (z.B. Nockenwellen oder Nockenscheibenwelle), einen Stößel, usw. Eine hydraulische Kopplung zweier Kolbensegmentringe ist in Fig. 5 gezeigt. Aus der Skizze ist ersichtlich, dass die antreibende Pumpe nicht gegen den resultierenden Druck bedingt durch den anliegenden Balg arbeiten muss, sondern nur gegen den Differenzdruck Δp. Alternativ dazu kann die Kopplung der Kolben hydraulisch erfolgen, die Verschiebung der Kolbensegmente jedoch durch einen überlagerten Mechanismus geschieht. In diesem Fallwürde die Hydraulikpumpe wegfallen und ein Aktuator würde die zusätzliche Kraft für die Aufweitung aufbringen.

Eine mechanische Kopplung über Nockenwellen ist in Fig. 6 gezeigt. Die Antriebswelle **1** wird dafür bis in den Kolben **2** verlängert. Dadurch, dass die beiden baugleichen Kolben spiegelsymmetrisch zueinander angeordnet sind, bewirkt die Drehung der Antriebswelle **1** beim ersten Kolben ein Verschieben der Kolbensegmente radial nach Außen, beim anderen Kolben radial nach innen. Durch diese Anordnung wird bewirkt, das die Druckkraft des am zweiten Kolben anliegenden Balges ein Moment in der Antriebswelle **1** erzeugt, das entgegengesetzt dem Moment ist, welches die Druckkraft des am ersten Kolben anliegenden Balges in der Welle erzeugt. Somit muss für die Drehung der Welle nur noch ein Differenzmoment aufgebracht werden.

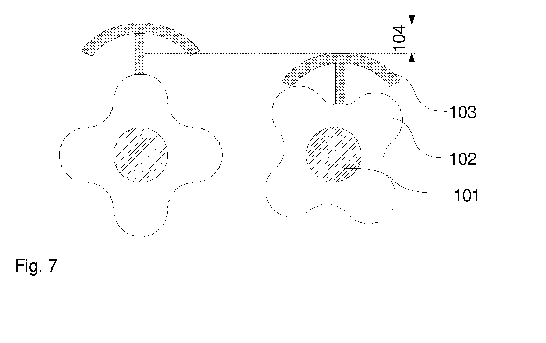

Eine mechanische Kopplung über Nockenscheiben ist in Fig. 7 gezeigt, wobei auf einer Welle **101** Nockenscheiben **102** um 30° versetzt angeordnet sind. Die Nockenscheiben **102** betätigen die Kolbensegmente oder Hülsen **103**. Die Kolbensegmente laufen über Stößel auf der Nockenscheibe. Damit wirkt eine Nockenscheibe mit den Kolbensegmenten als Kolbensegmentring.

Durch die Kopplung kann sich maximal die Differenz **104** aus den unterschiedlichen Positionierungen der Kolbensegmente ergeben.

Es sind mehr als zwei Nockenwellenscheiben einsetzbar.

### [Abbildungslegenden und Bezugszeichenliste]

Fig. 1 a Kolbensegmente sind in geschlossener Stellung, Rollbalg wird durch den Innendruck in die Form gedrückt
Fig. 1b Kolbensegmente sind in ausgefahrener Stellung, Rollbalg kann ohne Dehnung den Umfang annehmen
Fig. 2a Querschnitt durch eine erfindungsgemäße Luftfeder mit Nockenwellen
Fig. 2a Ansicht einer erfindungsgemäßen Luftfeder mit Nockenwellen
Fig. 3 eingefahrene Segmente mit Ausnehmung und Rollbalg
Fig. 4 Kopplung von zwei Kolbensegmenten zur Ausgleichung der Kräfte
Fig. 5 hydraulische Kopplung von zwei Kolbensegmenten zur Ausgleichung der Kräfte
Fig. 6 mechanische Kopplung von zwei Kolbensegmenten mit Nockenwellen zur Ausgleichung der Kräfte
Fig. 7 mechanische Kopplung von zwei Kolbensegmenten mit Nockenscheiben zur Ausgleichung der Kräfte

### Bezugszeichenliste

- 1: Welle Antrieb
- 2: Welle Abtrieb
- 3: Balg
- 4: Verklemmung Balg
- 5: Nocken
- 6: verschiebbare Kolbensegmente
- 7: Zahnräder

- 101: Welle
- 102: Nockenscheibe
- 103: Kolbensegment z.B. mit Stößel
- 104: Differenz des Umfangs zwischen zwei Kolben

## Patentansprüche

1. Luftfeder mit mindestens Rollbalg und mindestens einen Kolben **dadurch gekennzeichnet dass** der Kolben aus verschiebbaren Kolbensegmenten besteht.

2. Luftfeder nach Anspruch 1 **dadurch gekennzeichnet dass** die Kolbensegmente mindestens eine Ausnehmung aufweisen.

3. Luftfeder nach einem der Ansprüche 1 bis 2 **dadurch gekennzeichnet dass** die Kolbensegmente von mindestens zwei Kolbensegmentringen eine Kopplung aufweisen.

4. Luftfeder nach einem der Ansprüche 1 bis 3 **dadurch gekennzeichnet dass** die Kopplung mindestens eine Welle oder eine Hydraulik aufweist.

5. Luftfeder nach einem der Ansprüche 1 bis 4 **dadurch gekennzeichnet dass** die mindestens eine Ausnehmung im Kolbensegment als Fase oder Hinterschnitt ausgebildet ist.

6. Luftfeder nach einem der Ansprüche 1 bis 5 **dadurch gekennzeichnet dass** der Rollbalg mindestens eine Längsfalte aufweist.

7. Verfahren zur Luftfeder nach Anspruch 1 **dadurch gekennzeichnet dass** die Verschiebung von zwei Kolbensegmenten aus mindestens zwei unterschiedlichen Kolbensegmentringen gegenläufig erfolgt.
